# EUROPÄISCHE PATENTSCHRIFT

(11) **EP 2 426 353 B1**
(45) Veröffentlichungstag und Bekanntmachung des Hinweises auf die Patenterteilung: **17.04.2013**
(21) Anmeldenummer: 10175284.8
(22) Anmeldetag: 03.09.2010
(51) Int. Cl.: F03D 11/00, F03D 9/00

(54) **Kühlsystem für eine Offshore-Anordnung**
Cooling system for an offshore assembly
Système de refroidissement pour une installation en mer

(43) Veröffentlichungstag der Anmeldung: 07.03.2012
(73) Patentinhaber: ABB AG, 68309 Mannheim (DE)
(72) Erfinder: Stark, Günther, 64404, Bickenbach (DE); Halfmann, Michael, 64625, Bensheim (DE)

(56) Entgegenhaltungen:
- WO-A1-01/77526
- WO-A2-2010/026098
- DE-A1- 10 324 228
- US-A1- 2008 290 662

## Beschreibung

Die Erfindung betrifft ein Kühlsystem für eine Offshore-Anordnung, mit einem Innenraum, welcher durch eine zumindest abschnittsweise doppelwandig ausgeführte Hüllenwandung begrenzt ist, wobei wenigstens ein abschnittsweise zwischen der jeweiligen äußeren und inneren Hüllenwandung gebildeter Hohlraum mit Wasser flutbar ist, mit wenigstens einem geschlossenen Kühlmittelkreislauf, welcher wenigstens einen ersten Wärmetauscher zur Aufnahme einer im Innenraum entstehenden Wärmeleistung und wenigstens einen zweiten Wärmetauscher zur Abgabe der aufgenommenen Wärmeleistung umfasst.

Es ist allgemein bekannt, dass regenerative Energien eine zunehmende Bedeutung in der elektrischen Energieversorgung einnehmen. Windkraft ist neben beispielsweise der Solarenergie eine tragende Säule der regenerativen Energien. Offshore-Windenergieparks haben sich als zukunftsträchtige Möglichkeit erwiesen, den Anteil der regenerativen Energien in Energieversorgungsnetzen vorteilhaft zu steigern.

Hierzu wird in einem Abstand von beispielsweise mehreren Kilometern bis über 100 Kilometern vor einer Küste eine Vielzahl an Windkraftanlagen installiert, wobei jede Windkraftanlage zumeist auf einem Fundament oder Sockel angeordnet ist. Je nach geografischer Beschaffenheit hat das Meer eine Tiefe von einigen Metern bis über 60m. Die Fundamentbausweise ist auf ca. 40m Wassertiefe begrenzt, was beispielsweise auch die max. Wassertiefe in den Gebieten in der Nordsee ist. Um einen ordnungsgemäßen Betrieb der jeweiligen Windkraftanlagen beziehungsweise Windräder zu gewährleisten, sind diese in einem jeweiligen horizontalen Abstand von 300m - 1000m anzuordnen.

Derartigen Windparks umfassen eine Vielzahl an einzelnen Windkraftanlagen, beispielsweise 40 bis über 100, welche jeweils eine Maximalleistung von bis zu 6,5 MW aufweisen können. Um die von den Windkraftanlagen erzeugte elektrische Leistung in kontrollierter Weise in das elektrische Abnehmernetz einspeisen zu können, ist eine zentrale Umspannanlage notwendig, in welcher sowohl eine elektrische Zusammenschaltung der einzelnen Windkraftanlagen erfolgt als auch eine Umspannung auf eine geeignete üblicherweise höhere Spannungsebene. Es besteht auch die Möglichkeit, die erzeugte Spannung mittels leistungselektronischer Komponenten gleichzurichten, um so die elektrische Leistung mit möglichst geringen Übertragungsverlusten über ein Seekabel von dem Offshore-Windpark zu einer Netzeinspeisestelle an Land zu übertragen.

Unterseekabel sind eine sehr umweltverträgliche Art, elektrische Leistung über einen See- oder Meeresabschnitt zu transportieren, diese weisen aber eine so hohe elektrische Kapazität auf, dass sie für Wechselspannung - wenn überhaupt - nur zur Überbrückung eher kurzer Distanzen geeignet sind. Die für einen verlustarmen Einsatz von Unterseekabeln notwendige Gleichrichtung der Spannung erfolgt über Halbleiterbauelemente, welche verlustbehaftet sind und daher Abwärme produzieren. Auch zur koordinierten Steuerung der Abnahme der jeweils von den Windkraftanlagen erzeugten elektrischen Energie untereinander sind leistungselektronische Komponenten unverzichtbar. Bei einer installierten maximalen Leistung von beispielsweise 100MW und einem Verlustanteil von nur 1 % kann so eine in Form von Abwärme anfallende Verlustleistung von 1 MW und mehr entstehen, welche kontinuierlich abzuleiten ist.

Grundsätzlich erfolgt bei Offshore-Anordnungen die Wärmeabgabe über Wärmetauscher an die Außenluft oder durch Wärmeabgabe an das See- bzw. Meerwasser. Bei Letztgenanntem geschieht dies durch Ansaugen von kaltem Meerwasser in ein offenes rohrähnliches Kühlsystem, wobei die Rohre vorzugsweise in direktem Kontakt mit den zu kühlenden Komponenten stehen, so dass das Meerwasser während des Kühlvorganges die abzuleitende Abwärme aufnimmt und in erwärmten Zustand wieder ins Meer geleitet wird (siehe z.B. das Dokument DE 10324228A).

Nachteilig hieran ist jedoch - gerade im Bereich der Offshore-Windkraftanlagen -, dass durch die Einsaugöffnung Algen und sonstige unerwünschte Verunreinigungen eingesaugt werden, welche die Einlassöffnung unter Umständen verstopfen können und sich um den Auslauf für das erwärmte Kühlwasser herum Bewuchs oder ähnliches bildet, was in einer regelmäßigen Wartung zu entfernen ist. Zudem ist das salzige Meerwasser relativ aggressiv, so dass auch die Rohre des offenen Kühlsystems entsprechend auszulegen und zu warten sind.

Ausgehend von diesem Stand der Technik ist es Aufgabe der Erfindung, ein verbessertes Kühlsystem für eine Offshore-Anordnung anzugeben.

Diese Aufgabe wird gelöst durch ein Kühlsystem für eine Offshore-Anordnung der eingangs genannten Art. Dieses ist dadurch gekennzeichnet, dass der zweite Wärmetauscher zumindest teilweise in dem wenigstens einen flutbaren Hohlraum angeordnet ist.

Die Erfindung geht davon aus, dass eine Umspannanlage unterhalb der Wasseroberfläche in einem wasserdichten Rumpfkörper in Meeresbodennähe angeordnet ist, beispielsweise direkt auf dem Meeresboden oder auch zumindest teilweise in diesem versenkt. Dies bietet eine Vielzahl von Vorteilen, beispielsweise, dass die sternförmig von der Umspannanlage zu den einzelnen Windkraftanlagen zu verlegenden Energiekabel direkt auf dem Meeresboden geführt werden können und nicht von einer oberhalb der Wasseroberfläche angeordneten Umspannanlage zuerst auf den Meeresboden hinabgeführt werden müssen.

Ein derartiger Rumpfkörper weist vorzugsweise mehrere flutbare Hohlräume auf, die derart ausgestaltet sind, dass der Rumpfkörper mit vormontierter Umspannanlage mit nicht gefluteten Hohlräumen oder Ballasttanks schwimmend zum Einsatzort verbracht werden kann. Dort angekommen werden die Hohlräumen bzw. Ballasttanks geflutet, so dass sich der Rumpfkörper auf den Meeresboden absenkt, wo er dann fest verankert wird. Der Rumpfkörper ist vorzugsweise komplett doppelwandig auszuführen, um so auch eine erhöhte Sicherheit gegen eine Beschädigung einer Hüllenwand zu realisieren. Die zwischen den Wänden der Doppelwandung entstehenden Hohlräume können gut als Ballasttanks ausgeführt werden.

Die Grundidee der Erfindung besteht nun darin, statt eines offenen Kühlkreislaufes einen geschlossenen Sekundärkühlkreislauf zu verwenden und den zweiten Wärmetauscher, der die Abwärme in die kältere Umgebung abgeben soll, nicht im offenen Wasser, sondern in einem Ballasttank oder flutbaren Hohlraum anzuordnen. Dies bietet eine Vielzahl an Vorteilen, beispielsweise den einer deutlich erhöhten Sicherheit der Besatzung einer derartigen Unterwasser-Umspannanlage, sofern sie gerade beispielsweise zu Wartungszwecken an Bord ist. Erfindungsgemäß führt ein Leck im Kühlkreislauf nämlich im schlimmsten Fall lediglich zum Entleeren des Wasserinhaltes eines gefluteten Ballasttankes in den Innenraum des Rumpfkörpers, wohingegen bei einer herkömmlichen Anordnung mit offenem Kühlkreislauf der Rumpfkörper in kürzester Zeit komplett geflutet wäre.

In vorteilhafter Weise wird zudem vermieden, dass sich Bewuchs oder auch beispielsweise Muschelbänke an der Außenhaut der Rumpfstation bilden, weil es überhaupt keine zentrale Auslaufstelle für erwärmtes Kühlwasser gibt, welche dies begünstigen würde. Darüber hinaus ist auch die Gefahr einer Korrosion der Rohre des Kühlsystems deutlich reduziert, weil das in den gefluteten Hohlräumen oder Ballasttanks befindliche Wasser in der Regel nicht ausgetauscht wird. Es wird somit nicht kontinuierlich sauerstoffreiches frisches Wasser zugeführt, so dass das Wasser in den Hohlräumen nur einen beschränkten Gehalt an aggressiven Substanzen aufweist. Fernerhin kann das geschlossene Sekundärkühlsystem mit einem besonders geeigneten Kühl- oder Kältemittel befüllt werden, wodurch die Kühlleistung gesteigert werden kann. In vorteilhafter Weise ist auch der Fluss von aggressivem Meerwasser durch die Rohre des Kühlsystems vermieden.

Aufgrund der großen Kontaktfläche, welche die Ballasttanks bzw. flutbaren Hohlräume über die äußere Hüllenwandung mit dem Meerwasser bzw. Meeresboden haben, wohin die Wärme letztendlich abzugeben ist, ist dennoch eine gute Wärmeabfuhr gewährleistet. Ein Rumpfkörper weist - je nach Ausgestaltung - eine Grundfläche von einigen 100m² auf und hat in diesem breiten Bereich eine Höhe von beispielsweise 10m - 20m, womit sich eine entsprechend hohe Fläche der Seitenwände ergibt.

In einer bevorzugten Ausgestaltung des erfindungsgemäßen Kühlsystems ist der erste Wärmetauscher dafür vorgesehen, eine Verlustwärmeleistung einer im Innenraum angeordneten Umspannanlage aufzunehmen. Dies bedeutet insbesondere, dass bedarfsweise eine Verästelung des Kühlkreislaufes zu den Abwärme erzeugenden Komponenten, also zu beispielsweise vorhandenen leistungselektronischen Komponenten, aber auch Transformatoren, Reaktoren und Dieselgeneratoren erfolgt. Auf diese Weise wird die Kühlwirkung in vorteilhafter Weise gesteigert. Es kann aber auch sinnvoll sein, mehrere verschieden Kühlsysteme vorzusehen, um so die benötigte Rohrlänge für den sekundären Kühlkreislauf zu reduzieren. Durch mehrere unabhängige Kühlsysteme kann zudem eine Redundanz oder auch eine Überredundanz geschaffen werden, wodurch die Ausfallsicherheit gesteigert wird. Selbstverständlich ist das erfindungsgemäße Kühlsystem für jegliche Arten von zu kühlenden Wärmequellen geeignet.

In einer bevorzugten Anordnung ist die Hüllwandung derart ausgeprägt, dass der Innenraum, ohne selber geflutet zu werden, zumindest größtenteils unterhalb eines Wasserspiegels in einem Gewässer anordenbar ist. Um einen einfachen Zugang zu der Umspannanlage zu gewährleisten, sowie um auch größere Ersatzteile auszutauschen, ist es hilfreich, wenn oberhalb der Wasseroberfläche befindlicher Zugang mit entsprechendem Durchmesser vorgesehen ist, ähnlich dem Turm eines U-Bootes. Dieser bietet den Vorteil, dass in den oberen Wasserschichten, in welchen insbesondere Wellen auftreten, eine möglichst geringe Angriffsfläche vorhanden ist, was letztendlich auch Vorteile bei der Wartung der Struktur bzw. des Rumpfkörpers zur Folge hat. Demgemäß und selbstverständlich sind alle unter Wasser befindlichen Bereiche der Hüllenwandung entsprechend wasserdicht auszugestalten, wobei auch im Bereich oberhalb der Wasseroberfläche eine Verschließbarkeit höchst sinnvoll ist.

Bevorzugter Weise ist der wenigstens eine flutbare Hohlraum ein Ballasttank, welcher ohnehin zu Transportzwecken der Rumpfstation vorzusehen sind. In vorteilhafter Weise entfällt bei der Installation und beim Rückbau der Anlage die Notwendigkeit für Schwerlastkräne.

Die Kühlleistung des Kühlsystems kann dadurch gesteigert werden, dass der zweite Wärmetauscher mäander- und/oder wendelförmig angeordnete Wärmetauschrohre umfasst, welche in dem wenigstens einen flutbaren Hohlraum angeordnet sind. Hierdurch wird über eine vergrößerte Kontaktfläche der Wärmetransport von dem sekundären, geschlossenen Kühlkreislauf in den gefluteten Hohlraum gesteigert. In analoger Weise wird der Wärmetransport von dem gefluteten Hohlraum in das Umgebungswasser dadurch gesteigert, dass an der äußeren Hüllenwandung wenigstens eine in den wenigstens einen flutbaren Hohlraum hineinragende Kühlrippe vorgesehen ist.

Das Kühlsystem kann erfindungsgemäß derart ausgestaltet sein, dass der zweite Wärmetauscher mit einem vertikalen Versatz oberhalb des ersten Wärmetauschers angeordnet ist. In diesem Fall ergibt sich bei einer im Innenraum erhöhten Temperatur gegenüber dem Wasser im wenigstens einen gefluteten Hohlraum ein Naturumlauf des Kühlmittels, weil das aus dem ersten Wärmetauscher strömende erwärmte Kühlmittel eine geringere Dichte aufweist als das aus dem zweiten Wärmetauscher strömende abgekühlte Kühlmittel. Eine Pumpe kann in diesem Fall in vorteilhafter Weise entfallen.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: einen schematischen Aufbau eines exemplarischen Kühlsystems und
- Fig. 2: eine Schnittansicht durch eine Offshore-Anordnung mit Kühlsystem

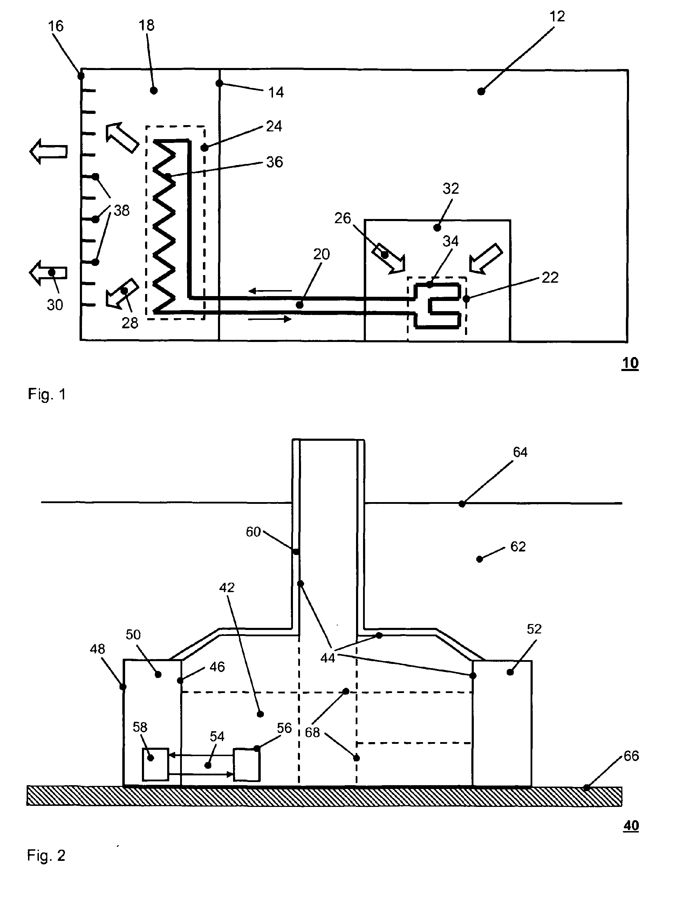

Fig. 1 zeigt einen schematischen Aufbau 10 eines exemplarischen Kühlsystems. Ein Innenraum 12 ist von einer Hüllwandung umgeben, welche im rechten Bildbereich doppelwandig ausgeführt ist, nämlich durch eine innere Hüllwandung 14 und durch eine äußere Hüllwandung 16. Der zwischen der inneren 14 und äußeren 16 Hüllwandung gebildete Hohlraum 18 ist in seinem oberen und unteren Bereich durch entsprechende Begrenzungswände hermetisch abgeschlossen, wobei allerdings im Bild nicht gezeigte Mittel zur Flutung und zum Entleeren des Hohlraums 18 vorgesehen sind. Ein Vorsehen von einer Vielzahl von hermetisch gegeneinander verschlossenen Hohlräumen erleichtert die Handhabung beim schwimmenden Transport. Zudem ist auch die Sicherheit nochmals gesteigert.

Das gesamte Kühlsystem 10 ist als von Wasser umgeben anzunehmen, wobei der innere Hohlraum 18 ebenfalls mit Wasser geflutet ist ― lediglich der Innenraum 12 ist als mit Luft gefüllt anzusehen. In dessen Mitte ist exemplarisch eine Umspannanlage 32 vorgesehen, welche beispielsweise neben Schaltkomponenten und Transformatoren eine Vielzahl an sonstigen Komponenten aufweist, welche im Betrieb der Umspannanlage eine Wärmeleistung 26 erzeugen, beispielsweise leistungselektronische Komponenten. Diese Umspannanlage 32 erwärmt einen ersten Wärmetauscher 22, welcher Teil eines geschlossenen Kühlkreislaufes 20 ist, durch welchen die Wärmeleistung mittels eines strömfähigen Kühlmittels zu dem zweiten Wärmetauscher 24 transportiert wird. Bevorzugter Weise ist der erste Wärmetauscher 22 verästelt zu den Stellen in der Umspannanlage, an welchen eine punktuelle Wärmeerzeugung erfolgt. In diesem Beispiel sind zur Erhöhung der Kontaktfläche mäanderförmige Wärmetauschrohre 34 vorgesehen. Als Kühlmittel, welches den Kühlkreislauf 20 durchströmt, ist beispielsweise Wasser eine denkbare Möglichkeit, es ist aber auch der Einsatz von Kältemitteln denkbar, da es sich ja um ein geschlossenes System handelt. Eine Pumpe, welche üblicherweise zur Umwälzung des Kühlmittels benötigt wird, ist nicht eingezeichnet, aber als vorhanden anzunehmen. Es sind aber je nach Dimensionierung des Systems auch Systeme ohne Pumpen denkbar, welche nur durch Schwerkraftkonvektion arbeiten. Hierbei ist der zweite Wärmetauscher oberhalb des ersten Wärmetauschers anzuordnen, wobei ein horizontaler Versatz untereinander selbstverständlich möglich ist.

Der zweite Wärmetauscher 24 ist erfindungsgemäß im gefluteten Hohlraum 18 angeordnet und gibt eine Wärmeleistung 28 von den mäanderförmig angeordneten Wärmetauschrohren 36, welche von erwärmten Kühlmittel durchströmt sind, in das Wasser im Hohlraum 18 ab. Hierdurch sinkt die Temperatur des Kühlmittels, wobei es nach Verlassen des zweiten Wärmetauschers 24 über das geschlossene Kühlsystem 20 wieder zurück zum ersten Wärmetauscher 22 fließt, wo es dann wieder erwärmt wird. In vorteilhafter Weise ist hier ein Fließen von Meerwasser durch den ersten Wärmetauscher vermieden.

Zur verbesserten Abgabe 30 der in das Wasser des gefluteten Hohlraums 18 eingetragenen Wärmeleistung 28 an das Umgebungswasser sind in den Hohlraum 18 hineinragende Kühlrippen 38 vorgesehen.

Fig. 2 zeigt eine Schnittansicht 40 durch eine Offshore-Anordnung mit Kühlsystem, welche in einem Gewässer oder Meer 62 auf dem Meeres- oder Gewässergrund 66 angeordnet ist. Ein Innenraum 42 ist durch die Kontur eines Rumpfkörpers gebildet, welcher in etwa die Form eines umgedrehten Trichters aufweist. Die Hüllwandung des Rumpfkörpers ist doppelwandig ausgeführt, wie mit den Bezugszeichen 44, 46, 48 angedeutet, wobei mehrere flutbare Hohlräume 50, 52 gebildet sind, die in diesem Beispiel auch als tatsächlich geflutet anzunehmen sind. Mit nicht gefluteten Hohlräumen oder Ballastkammern 50, 52 ist der Rumpfkörper schwimmfähig und kann leicht zu einem anderen Bestimmungsort verbracht werden, wohingegen die Hohlräume 50, 52, im verankerten und in der Fig. dargestellten Zustand des Rumpfkörpers auf dem Meeres- oder Gewässergrund 66 stets geflutet sind. Im oberen Bereich ist ein nicht flutbarer Hohlraum 60 angedeutet. In diesem Abschnitt dient die die Doppelwandigkeit lediglich der erhöhten Sicherheit gegen Beschädigungen von außen, beispielsweise gegen eine Kollision mit einem Schiff.

Es ist ein geschlossenes Kühlsystem 54 angedeutet, welches einen im Innenraum 42 angeordneten ersten Wärmetauscher 56 und einen im ersten gefluteten Hohlraum 50 angeordneten zweiten Wärmetauscher umfasst. Das Funktionsprinzip des Kühlsystems wurde schon zuvor erläutert. Der Innenraum 42 weist zunächst nahe am Meeresboden 66 einen Bereich mit mehreren durch Zwischenwände und Zwischendecken 68 gebildeten Räumen auf, beispielsweise für die Anordnung einer nicht gezeigten Umspannanlage oder auch für Mannschaftsquartiere. Der obere, deutlich verjüngte Bereich ragt über die Wasseroberfläche 64 heraus und dient als Zugang zu der Unterwasser-Umspannanlage.

### Bezugszeichenliste

- 10: schematischer Aufbau eines exemplarischen Kühlsystems
- 12: Innenraum
- 14: innere Hüllwandung
- 16: äußere Hüllwandung
- 18: flutbarer Hohlraum
- 20: geschlossener Kühlmittelkreislauf
- 22: erster Wärmetauscher
- 24: zweiter Wärmetauscher
- 26: im Innenraum entstehende Wärmeleistung
- 28: in ersten Hohlraum abgegebene Wärmeleistung
- 30: an Umgebung abgegebene Wärmeleistung
- 32: in Innenraum angeordnete Umspannanlage
- 34: mäanderförmige Wärmetauschrohre
- 36: wendelförmig angeordnete Wärmetauschrohre
- 38: in Hohlraum hineinragende Kühlrippen
- 40: Schnittansicht durch eine Offshore-Anordnung mit Kühlsystem
- 42: Innenraum
- 44: Hüllenwandung
- 46: innere Hüllenwandung
- 48: äußere Hüllenwandung
- 50: flutbarer erster Hohlraum
- 52: flutbarer zweiter Hohlraum
- 54: geschlossenes Kühlsystem
- 56: erster Wärmetauscher
- 58: zweiter Wärmetauscher
- 60: nicht flutbarer Hohlraum
- 62: Gewässer
- 64: Wasserspiegel
- 66: Gewässergrund
- 68: Zwischenwände / Zwischendecken

## Patentansprüche

1. Kühlsystem für eine Offshore-Anordnung (40), mit einem Innenraum (12, 42), welcher durch eine zumindest abschnittsweise doppelwandig ausgeführte Hüllenwandung (14, 16, 44, 46, 48) begrenzt ist, wobei wenigstens ein abschnittsweise zwischen der jeweiligen äußeren (16, 48) und inneren (14, 46) Hüllenwandung gebildeter Hohlraum (18, 50, 52) mit Wasser flutbar ist, mit wenigstens einem geschlossenen Kühlmittelkreislauf (20, 54), welcher wenigstens einen ersten Wärmetauscher (22, 56) zur Aufnahme einer im Innenraum (12, 42) entstehenden Wärmeleistung (26) und wenigstens einen zweiten Wärmetauscher (24, 58) zur Abgabe der aufgenommenen Wärmeleistung (28) umfasst, **dadurch gekennzeichnet, dass** der zweite Wärmetauscher (24, 58) zumindest teilweise in dem wenigstens einen flutbaren Hohlraum (18, 50, 52) angeordnet ist.

2. Kühlsystem nach Anspruch 1, **dadurch gekennzeichnet, dass** der erste Wärmetauscher (22, 56) dafür vorgesehen ist, eine Verlustwärmeleistung (26) einer im Innenraum (12, 42) angeordneten Umspannanlage (32) aufzunehmen.

3. Kühlsystem nach Anspruch 1 oder 2, **dadurch gekennzeichnet, dass** die Hüllwandung (14, 16, 44, 46, 48) derart ausgeprägt ist, dass der Innenraum (12, 42), ohne selber geflutet zu werden, zumindest größtenteils unterhalb eines Wasserspiegels (64) in einem Gewässer (62) anordenbar ist.

4. Kühlsystem nach einem der vorherigen Ansprüche, **dadurch gekennzeichnet, dass** der wenigstens eine flutbare Hohlraum (18, 50, 52) ein Ballasttank ist.

5. Kühlsystem nach einem der vorherigen Ansprüche, **dadurch gekennzeichnet, dass** der zweite Wärmetauscher (24, 58) mäander- (36) und/oder wendelförmig angeordnete Wärmetauschrohre umfasst, welche dem wenigstens einen flutbaren Hohlraum (18, 50, 52) angeordnet sind.

6. Kühlsystem nach einem der vorherigen Ansprüche, **dadurch gekennzeichnet, dass** an der äußeren Hüllenwandung (16, 48) wenigstens eine in den wenigstens einen flutbaren Hohlraum (18, 50, 52) hineinragende Kühlrippe (38) vorgesehen ist.

7. Kühlsystem nach einem der vorherigen Ansprüche, **dadurch gekennzeichnet, dass** der zweite Wärmetauscher (24, 58) mit einem vertikalen Versatz oberhalb des ersten Wärmetauschers (24, 58) angeordnet ist, so dass sich bei ein Naturumlauf des Kühlmittels ergibt.

8. Kühlsystem nach einem der vorherigen Ansprüche, **dadurch gekennzeichnet, dass** dieses größtenteils unterhalb eines Wasserspiegels (64) in einem Gewässer (62) angeordnet ist und der wenigstens eine flutbarere Hohlraum (18, 50, 52) mit Wasser geflutet ist.

## Claims

1. Cooling system for an offshore arrangement (40), comprising an interior (12, 42) which is bounded by an envelope wall (14, 16, 44, 46, 48) which has a double-walled design at least in certain sections, wherein at least one cavity (18, 50, 52) formed in certain sections between the respective outer (16, 48) and inner (14, 46) envelope wall can be flooded with water, comprising at least one closed coolant circuit (20, 54) which comprises at least a first heat exchanger (22, 56) for receiving a thermal power (26) generated in the interior (12, 42) and at least a second heat exchanger (24, 58) for discharging the received thermal power (28), **characterized in that** the second heat exchanger (24, 58) is arranged at least partially in the at least one floodable cavity (18, 50, 52).

2. Cooling system according to Claim 1, **characterized in that** the first heat exchanger (22, 56) is provided to receive a thermal power loss (26) of a transformer installation (32) arranged in the interior (12, 42).

3. Cooling system according to Claim 1 or 2, **characterized in that** the envelope wall (14, 16, 44, 46, 48) is distinguished such that the interior (12, 42), without being flooded itself, can be arranged at least to a very large part below a water level (64) in a body of water (62).

4. Cooling system according to one of the preceding claims, **characterized in that** the at least one floodable cavity (18, 50, 52) is a ballast tank.

5. Cooling system according to one of the preceding claims, **characterized in that** the second heat exchanger (24, 58) comprises heat exchange tubes which are arranged in a meandering (36) and/or helical manner and which are arranged in the at least one floodable cavity (18, 50, 52).

6. Cooling system according to one of the preceding claims, **characterized in that** at least one cooling rib (38) which projects into the at least one floodable cavity (18, 50, 52) is provided on the outer envelope wall (16, 48).

7. Cooling system according to one of the preceding claims, **characterized in that** the second heat exchanger (24, 58) is arranged with a vertical offset above the first heat exchanger (22, 56) such that a natural circulation of the coolant results.

8. Cooling system according to one of the preceding claims, **characterized in that** it is arranged to a very large part below a water level (64) in a body of water (62) and the at least one floodable cavity (18, 50, 52) is flooded with water.

## Revendications

1. Système de refroidissement pour une installation en mer (40), comprenant un espace interne (12, 42) qui est limité par une paroi d'enveloppe (14, 16, 44, 46, 48) réalisée au moins en partie avec une paroi double, au moins un espace vide (18, 50, 52) formé en partie entre la paroi d'enveloppe extérieure (16, 48) et intérieure (14, 46) respectives pouvant être parcouru par de l'eau, au moins un circuit de réfrigérant fermé (20, 54), qui comprend au moins un premier échangeur de chaleur (22, 56) pour recevoir une puissance thermique (26) générée dans l'espace interne (12, 42) et au moins un deuxième échangeur de chaleur (24, 58) pour délivrer la puissance thermique (28) reçue, **caractérisé en ce que** le deuxième échangeur de chaleur (24, 58) est disposé au moins en partie dans l'au moins un espace vide pouvant être parcouru par un écoulement (18, 50, 52).

2. Système de refroidissement selon la revendication 1, **caractérisé en ce que** le premier échangeur de chaleur (22, 56) est prévu pour recevoir une puissance de chaleur perdue (26) d'un poste de transformation (32) disposé dans l'espace interne (12, 42).

3. Système de refroidissement selon la revendication 1 ou 2, **caractérisé en ce que** la paroi d'enveloppe (14, 16, 44, 46, 48) est façonnée de telle sorte que l'espace interne (12, 42), sans être lui-même parcouru par un écoulement, puisse être disposé au moins en majeure partie en dessous d'un niveau d'eau (64) dans une étendue d'eau (62).

4. Système de refroidissement selon l'une quelconque des revendications précédentes, **caractérisé en ce que** l'au moins un espace vide pouvant être parcouru par un écoulement (18, 50, 52) est un réservoir de ballast.

5. Système de refroidissement selon l'une quelconque des revendications précédentes, **caractérisé en ce que** le deuxième échangeur de chaleur (24, 58) comprend des tubes d'échange de chaleur disposés en méandres (36) et/ou en hélice, qui sont disposés dans l'au moins un espace vide pouvant être parcouru par un écoulement (18, 50, 52).

6. Système de refroidissement selon l'une quelconque des revendications précédentes, **caractérisé en ce qu'**au moins une ailette de refroidissement (38) pénétrant dans l'au moins un espace vide pouvant être parcouru par un écoulement (18, 50, 52) est prévue au niveau de la paroi d'enveloppe extérieure (16, 48).

7. Système de refroidissement selon l'une quelconque des revendications précédentes, **caractérisé en ce que** le deuxième échangeur de chaleur (24, 58) est disposé avec un décalage vertical au-dessus du premier échangeur de chaleur (22, 56), de telle sorte qu'il se produise une circulation naturelle du réfrigérant.

8. Système de refroidissement selon l'une quelconque des revendications précédentes, **caractérisé en ce que** ladite majeure partie est disposée en dessous d'un niveau d'eau (64) dans une étendue d'eau (62) et l'au moins un espace vide pouvant être parcouru par un écoulement (18, 50, 52) est parcouru par de l'eau.
